# EUROPEAN PATENT APPLICATION

(11) **EP 4 230 833 A1**
(43) Date of publication of application: **23.08.2023**
(21) Application number: 22830356.6
(22) Date of filing: 16.05.2022
(51) Int. Cl.: E06B 9/262, E06B 9/34, E06B 9/56, E06B 9/68, E06B 9/38, H01M 50/244

(54) **CURTAIN**

(30) Priority: 05.01.2022 CN 202220024548 U; 05.01.2022 CN 202220024547 U
(71) Applicant: Guangdong Chuangming Sun-Shade Technology Co., Ltd, Guangzhou, Guangdong 510530 (CN)
(72) Inventor: HU, Di, Guangzhou, Guangdong 510530 (CN); LUO, Fangqing, Guangzhou, Guangdong 510530 (CN)
(74) Representative: Meyer, Thorsten
(86) International application number: PCT/CN2022/092951
(87) International publication number: WO 2023/130639

(57) **Abstract**

The present disclosure discloses a window shade. The window shade includes a first base, a second base, honeycomb fabric clamped between the first base and the second base, a motor provided on the second base, a winder connected to an output end of the motor, a cord, a battery holder, and a power supply battery provided on the battery holder and electrically connected to the motor, where the cord has one end connected to an output end of the winder and the other end connected to the first base; the second base is provided with a mounting chamber and a charging connector; the mounting chamber has a first sidewall provided with a first clamping strip and a second clamping strip and a second sidewall provided with a third clamping strip and a fourth clamping strip; and the battery holder has one side clamped between the first clamping strip and the second clamping strip and the other side clamped between the third clamping strip and the fourth clamping strip. The present disclosure solves the problem of the existing window shade that it is inconvenient to disassemble and recharge the power supply battery.

## Description

### TECHNICAL FIELD

The present disclosure relates to the technical field of shades, and in particular to a window shade.

### BACKGROUND

Traditional motorized honeycomb blinds must be externally connected to a 24 V or 220 V power supply. If the window is not provided with a reserved socket, the wire must be connected elsewhere, which is troublesome and not aesthetic.

With the development of smart home, some motor manufacturers incorporate lithium batteries inside the motor, which avoids the need for a reserved power interface in the window. However, since the power supply battery and the motor are arranged above the window, the user needs to climb above the window to replace or maintain the power supply battery, resulting in great inconvenience and security risks. In addition, most of the power supply batteries are detachable rechargeable batteries, but it is inconvenient for users, especially the children and the elderly, to disassemble the batteries for charging.

### SUMMARY

The present disclosure aims to provide a window shade to solve the problem of the existing window shade that it is inconvenient to replace and recharge the power supply battery.

In order to achieve the above objective, the present disclosure adopts the following technical solution:
The window shade includes a first base, a second base located below the first base and spaced from the first base, honeycomb fabric clamped between the first base and the second base, a motor provided on the second base, a winder connected to an output end of the motor, a cord, a battery holder, and a power supply battery provided on the battery holder; the power supply battery is electrically connected to the motor; and the cord includes one end connected to an output end of the winder and the other end connected to the first base; and
the second base is provided with a mounting chamber and a charging connector; the charging connector is electrically connected to the power supply battery; the mounting chamber is provided with a first sidewall and a second sidewall oppositely arranged; the first sidewall is provided with a first clamping strip and a second clamping strip spaced from top to bottom; the second sidewall is provided with a third clamping strip and a fourth clamping strip spaced from top to bottom; and the battery holder includes one side clamped between the first clamping strip and the second clamping strip and the other side clamped between the third clamping strip and the fourth clamping strip.

Further, the window shade further includes a programmable logic controller (PLC) circuit monitoring unit for monitoring a voltage of the power supply battery and electrically connected to the motor.

Further, the winder includes a spool and a positioning seat; the cord includes the one end wound on the spool; and two ends of one side of the positioning seat are clamped between the first clamping strip and the second clamping strip and two ends of another side of the positioning seat are clamped between the third clamping strip and the fourth clamping strip.

Further, the positioning seat includes a first bracket and a second bracket spaced from each other, and a connecting plate connecting the first bracket and the second bracket; the connecting plate is provided with a through hole through which the cord passes; the spool includes one end rotatably provided on the first bracket and the other end rotatably provided on the second bracket; and one end of the first bracket and one end of the second bracket are clamped between the first clamping strip and the second clamping strip, and the other end of the first bracket and the other end of the second bracket are clamped between the third clamping strip and the fourth clamping strip.

Further, the first bracket includes a first ring, a first elastic strip provided on an outer circumferential side of the first ring, and a second elastic strip provided on the outer circumferential side of the first ring; the first elastic strip and the second elastic strip are spaced from each other; the first elastic strip is provided with a first bump for being clamped between the first clamping strip and the second clamping strip, and the second elastic strip is provided with a second bump for being clamped between the third clamping strip and the fourth clamping strip; and a distance between the first elastic strip and the second elastic strip gradually increases in a direction away from the first ring; and
the second bracket includes a second ring, a third elastic strip provided on an outer circumferential side of the second ring, and a fourth elastic strip provided on the outer circumferential side of the second ring; the third elastic strip and the fourth elastic strip are spaced from each other; the third elastic strip is provided with a third bump for being clamped between the first clamping strip and the second clamping strip, and the fourth elastic strip is provided with a fourth bump for being clamped between the third clamping strip and the fourth clamping strip; and a distance between the third elastic strip and the fourth elastic strip gradually increases in a direction away from the second ring.

Further, the mounting chamber is further provided with a top wall connecting the first sidewall and the second sidewall; the first sidewall is further provided with a fifth clamping strip, and the second sidewall is further provided with a sixth clamping strip; and two ends of one side of the connecting plate are clamped between the fifth clamping strip and the top wall and two ends of another side of the connecting plate are clamped between the sixth clamping strip and the top wall.

Further, the charging connector is a universal serial bus (USB) interface.

Further, an end of the second base is further provided with a mounting port communicated with the mounting chamber; and the battery holder enters from the mounting port and is provided in the mounting chamber.

Further, the second base is provided with an end cap covering the mounting port; and the end cap is provided with a closure plate, a first clamping plate connected to the closure plate and clamped between the first clamping strip and the second clamping strip, and a second clamping plate connected to the closure plate and clamped between the third clamping strip and the fourth clamping strip.

Further, the honeycomb fabric is provided therein with a cord hole running through the honeycomb fabric from top to bottom; and the cord includes the one end wound on the spool and the other end connected to the first base through the cord hole.

Compared with the prior art, the present disclosure has the following benefits. The window shade of the present disclosure is provided with a built-in power supply battery, which solves the problem that the traditional window shade needs to be connected to a cable all the time to supply power. When the power supply battery is out of power and needs to be recharged, the motor shakes to prompt the user that the power supply battery needs to be recharged. The user can quickly connect the external cable through the charging connector, avoiding the trouble of disassembling the power supply battery. The power supply battery and motor are placed at a lower position, which does not require the user to climb up for wiring and charging, thus extending the applicability. The winder has a simple structure. The spool of the winder is rotatably provided on the positioning seat, which is positioned through the first clamping strip, the second clamping strip, the third clamping strip, the fourth clamping strip, the fifth clamping strip, and the sixth clamping strip. In this way, the positioning seat can be quickly mounted in the mounting chamber of the second base, without the need to set screws.

### BRIEF DESCRIPTION OF THE DRAWINGS

FIG. 1 is a structural diagram of a window shade of the present disclosure;
FIG. 2 is a structural diagram of a second base, a motor, a cord, a winder, and a battery holder;
FIG. 3 is an enlarged view of A shown in FIG. 2;
FIG. 4 is a structural diagram of an end cap;
FIG. 5 is a structural diagram of the winder;
FIG. 6 is a structural diagram of the winder from another perspective;
FIG. 7 is a structural diagram of the battery holder and a power supply battery; and
FIG. 8 is a bottom view of the motorized window shade.

Reference Numerals: 1. first base; 2. second base; 3. honeycomb fabric; 4. motor; 5. winder; 6. cord; 7. power supply battery; 8. PLC circuit monitoring unit; 9. battery holder; 21. first sidewall; 22. second sidewall; 23. top wall; 24. end cap; 25. mounting chamber; 26. housing; 27. bottom plate; 28. mounting port; 31. cord hole; 51. positioning seat; 52. spool; 71. power supply interface; 91. first shell; 92. second shell; 93. wire hole; 94. threaded hole; 95. clamping piece; 211. first clamping strip; 212. second clamping strip; 213. fifth clamping strip; 214. seventh clamping strip; 221. third clamping strip; 222. fourth clamping strip; 223. sixth clamping strip; 224. eighth clamping strip; 241. closure plate; 242. first clamping plate; 243. second clamping plate; 244. third clamping plate; 245. fourth clamping plate; 246. fifth clamping plate; 247. charging connector; 271. first hook; 272. second hook; 511. first bracket; 512. second bracket; 513. connecting plate; 5111. ring; 5112. first elastic strip; 5113. second elastic strip; 5114. first bump; 5115. second bump; 5121. second ring; 5122. third elastic strip; 5123. fourth elastic strip; 5124. third bump; 5125. fourth bump; and 5131. through hole.

### DETAILED DESCRIPTION OF THE EMBODIMENTS

The specific implementations of the present disclosure are described in further detail below with reference to the drawings and embodiments. The following embodiments are used to illustrate the present disclosure, rather than to limit the scope of the present disclosure.

It should be understood that, in the description of the present disclosure, the terms such as "central", "longitudinal", "transverse", "long", "wide", "thick", "upper", "lower", "front", "back", "left", "right", "vertical", "horizontal", "top", "bottom", "inner", "outer", "clockwise", "anticlockwise", "axial", "radial" and "circumferential" are intended to indicate orientations shown in the drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

It should be noted that, in the description of the present disclosure, unless otherwise clearly specified that, meanings of terms "mount", "connect" and "communicate" should be understood in a broad sense. For example, a connection may be a fixed connection, a removable connection, or an integral connection; may be a mechanical connection or an electrical connection; may be a direct connection or an indirect connection via an intermediate medium; or may be intercommunication between two components. Those of ordinary skill in the art may understand specific meanings of the above terms in the present disclosure based on a specific situation.

It should be understood that in the description of the present disclosure, the terms such as "first" and "second" are intended to describe various information, but the information is not limited to these terms, and these terms are only used to distinguish the same type of information from each other. For example, without departing from the scope of the present disclosure, "first" information may be referred to as "second" information, and similarly, "second" information may be referred to as "first" information.

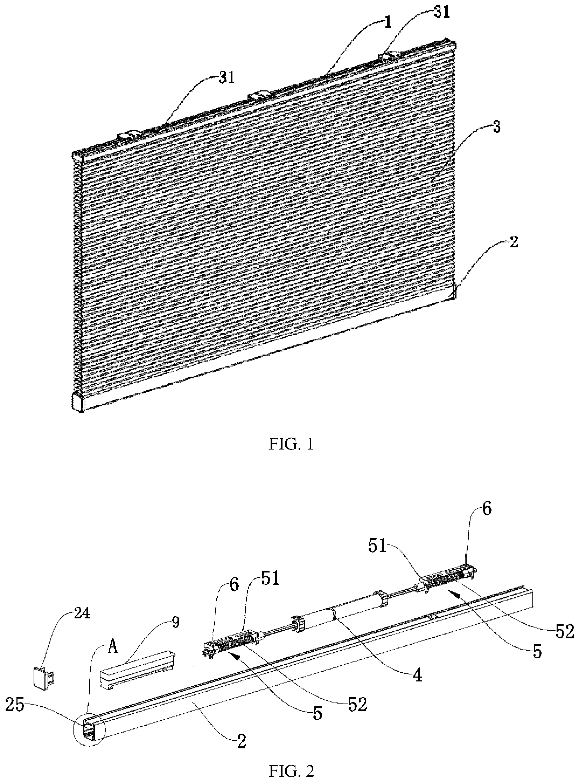

As shown in FIGS. 1 to 3 and 8, an embodiment provides a window shade. The window shade includes a first base 1, a second base 2 located below the first base 1 and spaced from the first base 1, honeycomb fabric 3 clamped between the first base 1 and the second base 2, a motor 4 provided on the second base 2, a winder 5 connected to an output end of the motor 4, a cord 6, a battery holder 9, and a power supply battery 7 provided on the battery holder 9.

The second base 2 is provided with a mounting chamber 25. The mounting chamber 25 runs through the second base 2 from left to right. Two ends of the second base 2 are respectively provided with detachable end caps 24. After the winder 5 and other components are provided in the mounting chamber 25, the end caps 24 cover the two ends of the second base 2 to prevent dust from entering the mounting chamber 25. The mounting chamber 25 is provided with oppositely arranged first sidewall 21 and second sidewall 22. The first sidewall 21 and the second sidewall 22 are horizontally spaced from each other. The first sidewall 21 is provided with a first clamping strip 211 and a second clamping strip 212 spaced from top to bottom. The first clamping strip 211 and the second clamping strip 212 extend along the mounting chamber 25. The second sidewall 22 is provided with a third clamping strip 221 and a fourth clamping strip 222 spaced from top to bottom. The third clamping strip 221 and the fourth clamping strip 222 extend along the mounting chamber 25.

The power supply battery 7 is a lithium battery. The power supply battery 7 is electrically connected to the motor 4 through a wire. The honeycomb fabric 3 has an upper end fixedly connected to the first base 1 and a lower end fixedly connected to the second base 2. The cord 6 includes one end connected to an output end of the winder 5 and the other end connected to the first base 1. When the motor 4 drives the winder 5 to rotate in one direction, the winder 5 winds the cord 6, such that the second base 2 moves upward close to the first base 1 to open the window shade. When the motor 4 drives the winder 5 to rotate in an opposite direction, the winder 5 releases the cord 6, such that the second base 2 moves downward away from the first base 1 to close the window shade.

The second base 2 is provided with a charging connector 247. The charging connector 247 is electrically connected to the power supply battery 7. A battery holder 9 is provided in the mounting chamber 25. The battery holder 9 includes one side clamped between the first clamping strip 211 and the second clamping strip 212 and the other side clamped between the third clamping strip 221 and the fourth clamping strip 222. In this design, one side of the battery holder 9 is clamped between the first clamping strip 211 and the second clamping strip 212, and the other side of the battery holder 9 is clamped between the third clamping strip 221 and the fourth clamping strip 222. The design realizes positioning of the battery holder 9, without the need for fasteners such as screws, and realizes easy and rapid mounting of the battery holder 9. The power supply battery is charged by an external cable through the charging connector 247. When the power supply battery 7 needs to be charged, the power supply battery does not need to be disassembled, which avoids the trouble of disassembling the power supply battery and improves convenience of the window shade.

As shown in FIGS. 1 to 3, the winder 5 is provided on the second base 2. The winder 5 is provided at a lower position to facilitate maintenance of the window shade. The winder includes a spool 52 and a positioning seat 51. The spool 52 is rotatably provided on the positioning seat 51. The first base 1 is fixedly provided on an upper edge of a window. The cord 6 includes one end wound on the spool 52 and the other end connected to the first base 1. The spool 52 is rotated to wind up or release the cord 6, so as to allow the second base 2 to move upward or downward. When the motor 4 drives the spool 52 of the winder 5 to rotate in one direction, the spool 52 of the winder 5 winds up the cord 6, such that the second base 2 moves upward close to the first base 1 to open the window shade. When the motor 4 drives the spool 52 of the winder 5 to rotate in the opposite direction, the spool 52 of the winder 5 releases the cord 6, such that the second base 2 moves downward away from the first base 1 to close the window shade.

Two ends of one side of the positioning seat 51 are clamped between the first clamping strip 211 and the second clamping strip 212 and two ends of another side of the positioning seat 51 are clamped between the third clamping strip 221 and the fourth clamping strip 222. When the end cap 24 is opened, the positioning seat 51 slides into the mounting chamber 25 from an opening of the mounting chamber 25. Meanwhile, the two ends of one side of the positioning seat 51 are clamped between the first clamping strip 211 and the second clamping strip 212, and the two ends of another side of the positioning seat 51 are clamped between the third clamping strip 221 and the fourth clamping strip 222. The end cap 24 is closed to realize mounting and positioning of the positioning seat 51. The mounting avoids fasteners such as screws, and is easy and fast.

Specifically, in an embodiment, the spool 52 is tapered, and the cord is wound into a tapered shape on the spool 52, which realizes simple and reliable winding.

Specifically, in an embodiment, left and right ends of the second base 2 are respectively provided with mounting ports 28 communicated with the mounting chamber 25. The battery holder 9 enters from the mounting port 28 and is provided in the mounting chamber 25.

Specifically, in an embodiment, the charging connector 247 is a universal serial bus (USB) interface. The USB interface is adapted to the charging plug of the existing mobile phone and other electronic products, so the charging plug of the mobile phone can be used for charging.

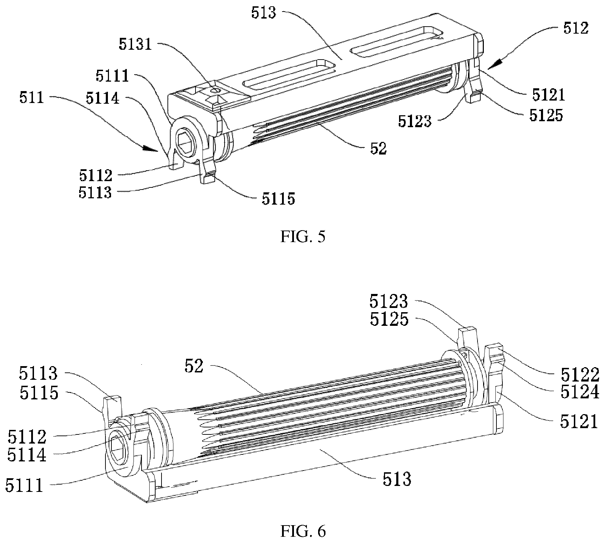

As shown in FIGS. 2, 5 and 6, specifically, in an embodiment, the positioning seat 51 includes a first bracket 511 and a second bracket 512 spaced from each other. The spool 52 includes one end rotatably provided on the first bracket 511 and the other end rotatably provided on the second bracket 512. One end of the first bracket 511 and one end of the second bracket 512 are clamped between the first clamping strip 211 and the second clamping strip 212, and the other end of the first bracket 511 and the other end of the second bracket 512 are clamped between the third clamping strip 221 and the fourth clamping strip 222.

Specifically, in an embodiment, the positioning seat 51 further includes a connecting plate 513 connecting the first bracket 511 and the second bracket 512. The connecting plate 513 is provided with a through hole 5131 through which the cord 6 passes. The connecting plate 513 connects the first bracket 511 and the second bracket 512 to strengthen the stability between the first bracket 511 and the second bracket 512, such that the spool 52 can rotate stably.

Specifically, in an embodiment, the first bracket 511 includes a first ring 5111, a first elastic strip 5112 provided on an outer circumferential side of the first ring 5111, and a second elastic strip 5113 provided on the outer circumferential side of the first ring 5111. The spool 52 is rotatably provided on an inner ring of the first ring 5111. The first elastic strip 5112 and the second elastic strip 5113 are tangent to the first ring 5111, and the first elastic strip 5112 and the second elastic strip 5113 are horizontally spaced from each other. The first elastic strip 5112 is provided with a first bump 5114 for being clamped between the first clamping strip 211 and the second clamping strip 212, and the second elastic strip 5113 is provided with a second bump 5115 for being clamped between the third clamping strip 221 and the fourth clamping strip 222. The first bump 5114 extends to the first sidewall 21 and is clamped between the first clamping strip 211 and the second clamping strip 212, and the second bump 5115 extends to the second sidewall 22 and is clamped between the third clamping strip 221 and the fourth clamping strip 222.

Specifically, in an embodiment, a distance between the first elastic strip 5112 and the second elastic strip 5113 gradually increases in a direction away from the first ring 5111. The first elastic strip 5112 and the second elastic strip 5113 are elastic. A distance between an end of the first elastic strip 5112 away from the first ring 5111 and an end of the second elastic strip 5113 away from the first ring 5111 is greater than a diameter of the spool 52 and greater than a distance between the first sidewall 21 and the second sidewall 22. The first bump 5114 is stably clamped between the first clamping strip 211 and the second clamping strip 212 through the elasticity of the first elastic strip 5112, and the second bump 5115 is stably clamped between the third clamping strip 221 and the fourth clamping strip 222 through the elasticity of the second elastic strip 5113.

Specifically, in an embodiment, the second bracket 512 includes a second ring 5121, a third elastic strip 5122 provided on an outer circumferential side of the second ring 5121, and a fourth elastic strip 5123 provided on the outer circumferential side of the second ring 5121. The spool 52 is rotatably provided on an inner ring of the second ring 5121. The third elastic strip 5122 and the fourth elastic strip 5123 are tangent to the second ring 5121, and the third elastic strip 5122 and the fourth elastic strip 5123 are horizontally spaced from each other. The third elastic strip 5122 is provided with a third bump 5124 for being clamped between the first clamping strip 211 and the second clamping strip 212, and the fourth elastic strip 5123 is provided with a fourth bump 5125 for being clamped between the third clamping strip 221 and the fourth clamping strip 222. The third bump 5124 extends to the first sidewall 21 and is clamped between the first clamping strip 211 and the second clamping strip 212, and the fourth bump 5125 extends to the second sidewall 22 and is clamped between the third clamping strip 221 and the fourth clamping strip 222.

Specifically, in an embodiment, a distance between the third elastic strip 5122 and the fourth elastic strip 5123 gradually increases in a direction away from the second ring 5121. The third elastic strip 5122 and the fourth elastic strip 5123 are elastic. A distance between an end of the third elastic strip 5122 away from the second ring 5121 and an end of the fourth elastic strip 5123 away from the second ring 5121 is greater than a diameter of the spool 52 and greater than a distance between the first sidewall 21 and the second sidewall 22. The third bump 5124 is stably clamped between the first clamping strip 211 and the second clamping strip 212 through the elasticity of the third elastic strip 5122, and the fourth bump 5125 is stably clamped between the third clamping strip 221 and the fourth clamping strip 222 through the elasticity of the fourth elastic strip 5123.

Specifically, in an embodiment, the mounting chamber 25 is further provided with a top wall 23 connecting the first sidewall 21 and the second sidewall 22. The first sidewall 21 is further provided with a fifth clamping strip 213, and the second sidewall 22 is further provided with a sixth clamping strip 223. Two ends of one side of the connecting plate 513 are clamped between the fifth clamping strip 213 and the top wall 23 and two ends of another side of the connecting plate 513 are clamped between the sixth clamping strip 223 and the top wall 23. Since the fifth clamping strip 213 and the top wall 23 clamp the two ends of one side of the connecting plate 513 and the sixth clamping strip 223 and the top wall 23 clamp the two ends of the other side of the connecting plate 513, the connecting plate 513 is stably mounted to avoid displacement of the positioning seat 51 in case the spool 52 is stuck. Therefore, the positioning seat 51 is stable enough without the need for screws.

As shown in FIGS. 2, 3, 4 and 8, specifically, in an embodiment, the end cap 24 is provided with a closure plate 241, a first clamping plate 242 connected to the closure plate 241 and clamped between the first clamping strip 211 and the second clamping strip 212, and a second clamping plate 243 connected to the closure plate 241 and clamped between the third clamping strip 221 and the fourth clamping strip 222. The first clamping plate 242 and the second clamping plate 243 are horizontally spaced from each other. Through the first clamping plate 242 and the second clamping plate 243, the end cap 24 is detachably connected to the second base 2 to facilitate maintenance of the motor 4 and the power supply battery. When the battery holder 9 is provided in the mounting chamber 25, the end cap 24 covers the mounting port 28. The end cap 24 is intended to prevent dust and protect the motor 4, the power supply battery, and the battery holder 9. There are two end caps 24, which respectively cover the mounting ports 28 at the left and right ends of the second base 2.

Specifically, in an embodiment, the end cap 24 is further provided with a third clamping plate 244 connected to the closure plate 241 and clamped between the first clamping strip 211 and the fifth clamping strip 213, and a fourth clamping plate 245 connected to the closure plate 241 and clamped between the third clamping strip 221 and the sixth clamping strip 223. The third clamping plate 244 and the first clamping plate 242 are spaced from top to bottom, and the fifth clamping strip 213 is clamped between the first clamping plate 242 and the third clamping plate 244. The fourth clamping plate 245 and the second clamping plate 243 are spaced from top to bottom, and the sixth clamping strip 223 is clamped between the fourth clamping plate 245 and the second clamping plate 243. The third clamping plate 244 and the fourth clamping plate 245 strengthen the connection between the end cap 24 and the second base 2.

Specifically, in an embodiment, the end cap 24 is further provided with a fifth clamping plate 246 connected to the closure plate 241 and clamped into the mounting chamber 25. The fifth clamping plate 246 is located at a lower end of the closure board 241, and the charging connector 247 is located on the fifth clamping plate 246. The charging connector 247 is located at a lower end of the fifth clamping plate 246 of the end cap 24. That is, after the end cap 24 is covered, the charging connector 247 on the end cap 24 is located on a lower end surface of the end cap 24. The end cap 24 eases charging by the charging connector, and realizes aesthetics.

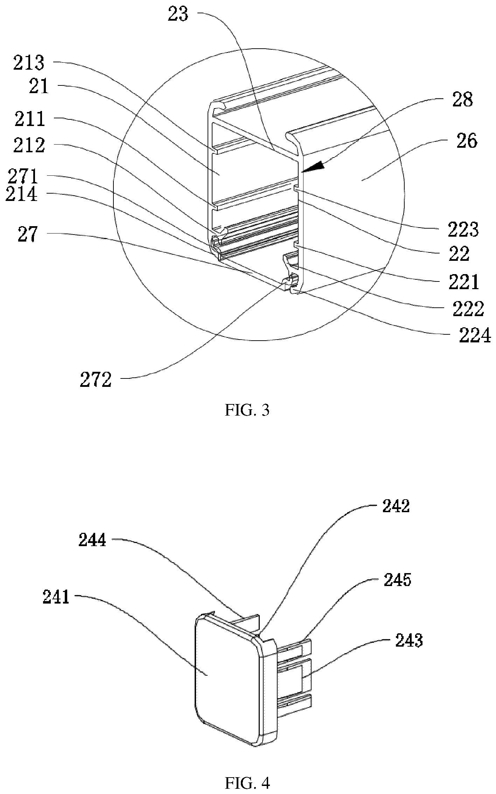

As shown in FIGS. 2 and 3, specifically, in an embodiment, the second base 2 includes a housing 26 and a bottom plate 27. The housing 26 and the bottom plate 27 are detachably connected and enclose the mounting chamber 25. The first sidewall 21 and the second sidewall 22 are located on the housing 26. The first sidewall 21 is further provided with a seventh clamping strip 214, and the second sidewall 22 is further provided with an eighth clamping strip 224. The bottom plate 27 is provided with a first hook 271 clamped between the seventh clamping strip 214 and the second clamping strip 212, and a second hook 272 clamped between the eighth clamping strip 224 and the fourth clamping strip 222. The seventh clamping strip 214 and the eighth clamping strip 224 are spaced from each other. The seventh clamping strip 214 and the eighth clamping strip 224 are extended to be close to each other. The seventh clamping strip 214 and the eighth clamping strip 224 are located at a lower end of the housing 26 and are smoothly connected to the housing 26. The first hook 271 and the second hook 272 are spaced from each other and connected to an upper end surface of the bottom plate 27. The first hook 271 and the second hook 272 each are Z-shaped. The first hook 271 is clamped between the eighth clamping strip 224 and the fourth clamping strip 222, and the second hook 272 is clamped between the eighth clamping strip 224 and the fourth clamping strip 222. In this way, the mounting and removal of the bottom plate 27 are realized by sliding the bottom plate 27 horizontally.

As shown in FIG. 1, specifically, in an embodiment, the honeycomb fabric 3 is provided therein with a cord hole 31 running through the honeycomb fabric 3 from top to bottom. The cord 6 includes the one end wound on the spool 52 and the other end connected to the first base 1 through the cord hole 31. The cord 6 is hidden to realize aesthetic appearance of the window shade.

As shown in FIGS. 2, 3 and 7, specifically, in an embodiment, the battery holder 9 includes a first shell 91 and a second shell 92 detachably provided on the first shell 91. The first shell 91 and the second shell 92 enclose a receiving chamber for receiving the power supply battery 7. The first shell 91 is provided with a clamping piece 95, and the clamping piece 95 has an isosceles-trapezoid cross-section. The first shell 91 is provided with a wire hole 93 communicated with the receiving chamber. A wire is connected to the charging connector 247 and the power supply battery 7 through the wire hole 93. The clamping piece 95 includes one end clamped between the first clamping strip 211 and the second clamping strip 212 and the other end clamped between the third clamping strip 221 and the fourth clamping strip 222.

Specifically, in an embodiment, the second shell 92 is provided with a threaded hole 94 threaded to the second base 2. One side of the first shell 91 and one side of the second shell 92 are clamped between the first clamping strip 211 and the fifth clamping strip 213, and the other side of the first shell 91 and the other side of the second shell 92 are clamped between the third clamping strip 221 and the sixth clamping strip 223. The first clamping strip 211, the fifth clamping strip 213, the third clamping strip 221, and the sixth clamping strip 223 jointly clamp the first shell 91 and the second shell 92 to avoid the first shell 91 and the second shell 92 being separated in the mounting chamber 25.

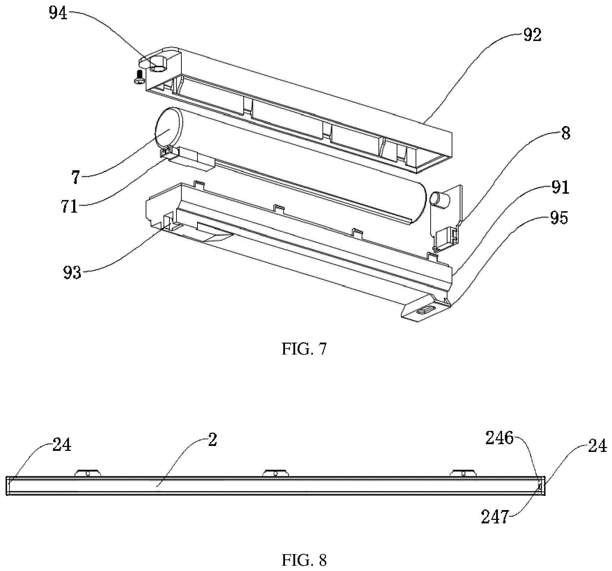

As shown in FIGS. 2 and 7, specifically, in an embodiment, the window shade further includes a programmable logic controller (PLC) circuit monitoring unit 8 for monitoring a voltage of the power supply battery 7. The motor 4 is connected in a transmission manner to the spool 52, and the PLC circuit monitoring unit 8 is electrically connected to the motor 4. The power supply battery 7 is provided with a power supply interface 71 electrically connected to the PLC circuit monitoring unit 8. The motor 4 is a direct-current (DC) motor with low power consumption and a low speed of 34 r/min. The motor 4 operates normally at 6.7-7.4 V, and shakes when the voltage drops below 6.7 V to prompt the user that the power supply battery 7 is out of power and needs to be recharged. The normal supply voltage of the lithium battery is 7.4 V As the operation time increases, the output voltage of the power supply battery 7 decreases gradually. When it drops to 6.7 V, the PLC circuit monitoring unit 8 detects that the current in the circuit drops. However, the motor 4 continues to work for 4.5 cycles each time when the PLC circuit monitoring unit 8 receives a control signal. A Hall element in the PLC circuit monitoring unit 8 inductively counts the working cycles of the motor 4. When the number of the working cycles of the motor reaches 4.5, the PLC circuit monitoring unit 8 stops supplying power to the motor 4, thus controlling the motor 4 not to work continuously, so as to prompt the user to recharge the lithium battery. When the voltage of the lithium battery drops below 6.4 V, the motor 4 stops completely.

The above described are merely preferred implementations of the present disclosure. It should be noted that those of ordinary skill in the art may further make several improvements and modifications without departing from the principle of the present disclosure, but such improvements and modifications should be deemed as falling within the protection scope of the present disclosure.

## Claims

1. A window shade, comprising a first base (1), a second base (2) located below the first base (1) and spaced from the first base (1), honeycomb fabric (3) clamped between the first base (1) and the second base (2), a motor (4) provided on the second base (2), a winder (5) connected to an output end of the motor (4), a cord (6), a battery holder (9), and a power supply battery (7) provided on the battery holder (9), wherein the power supply battery (7) is electrically connected to the motor (4); and the cord (6) comprises one end connected to an output end of the winder (5) and the other end connected to the first base (1); and
the second base (2) is provided with a mounting chamber (25) and a charging connector (247); the charging connector (247) is electrically connected to the power supply battery (7); the mounting chamber (25) is provided with a first sidewall (21) and a second sidewall (22) oppositely arranged; the first sidewall (21) is provided with a first clamping strip (211) and a second clamping strip (212) spaced from top to bottom; the second sidewall (22) is provided with a third clamping strip (221) and a fourth clamping strip (222) spaced from top to bottom; and the battery holder (9) comprises one side clamped between the first clamping strip (211) and the second clamping strip (212) and the other side clamped between the third clamping strip (221) and the fourth clamping strip (222).

2. The window shade according to claim 1, wherein the window shade further comprises a programmable logic controller (PLC) circuit monitoring unit (8) for monitoring a voltage of the power supply battery (7) and electrically connected to the motor (4).

3. The window shade according to claim 1, wherein the winder (5) comprises a spool (52) and a positioning seat (51); the cord (6) comprises the one end wound on the spool (52); and two ends of one side of the positioning seat (51) are clamped between the first clamping strip (211) and the second clamping strip (212) and two ends of another side of the positioning seat (51) are clamped between the third clamping strip (221) and the fourth clamping strip (222).

4. The window shade according to claim 3, wherein the positioning seat (51) comprises a first bracket (511) and a second bracket (512) spaced from each other, and a connecting plate (513) connecting the first bracket (511) and the second bracket (512); the connecting plate (513) is provided with a through hole (5131) through which the cord (6) passes; the spool (52) comprises one end rotatably provided on the first bracket (511) and the other end rotatably provided on the second bracket (512); and one end of the first bracket (511) and one end of the second bracket (512) are clamped between the first clamping strip (211) and the second clamping strip (212), and the other end of the first bracket (511) and the other end of the second bracket (512) are clamped between the third clamping strip (221) and the fourth clamping strip (222).

5. The window shade according to claim 4, wherein the first bracket (511) comprises a first ring (5111), a first elastic strip (5112) provided on an outer circumferential side of the first ring (5111), and a second elastic strip (5113) provided on the outer circumferential side of the first ring (5111); the first elastic strip (5112) and the second elastic strip (5113) are spaced from each other; the first elastic strip (5112) is provided with a first bump (5114) for being clamped between the first clamping strip (211) and the second clamping strip (212), and the second elastic strip (5113) is provided with a second bump (5115) for being clamped between the third clamping strip (221) and the fourth clamping strip (222); and a distance between the first elastic strip (5112) and the second elastic strip (5113) gradually increases in a direction away from the first ring (5111); and
the second bracket (512) comprises a second ring (5121), a third elastic strip (5122) provided on an outer circumferential side of the second ring (5121), and a fourth elastic strip (5123) provided on the outer circumferential side of the second ring (5121); the third elastic strip (5122) and the fourth elastic strip (5123) are spaced from each other; the third elastic strip (5122) is provided with a third bump (5124) for being clamped between the first clamping strip (211) and the second clamping strip (212), and the fourth elastic strip (5123) is provided with a fourth bump (5125) for being clamped between the third clamping strip (221) and the fourth clamping strip (222); and a distance between the third elastic strip (5122) and the fourth elastic strip (5123) gradually increases in a direction away from the second ring (5121).

6. The window shade according to claim 5, wherein the mounting chamber (25) is further provided with a top wall (23) connecting the first sidewall (21) and the second sidewall (22); the first sidewall (21) is further provided with a fifth clamping strip (213), and the second sidewall (22) is further provided with a sixth clamping strip (223); and two ends of one side of the connecting plate (513) are clamped between the fifth clamping strip (213) and the top wall (23) and two ends of another side of the connecting plate (513) are clamped between the sixth clamping strip (223) and the top wall (23).

7. The window shade according to claim 1, wherein the charging connector (247) is a universal serial bus (USB) interface.

8. The window shade according to claim 2, wherein an end of the second base (2) is further provided with a mounting port (28) communicated with the mounting chamber (25); and the battery holder (9) enters from the mounting port (28) and is provided in the mounting chamber (25).

9. The window shade according to claim 8, wherein the second base (2) is provided with an end cap (24) covering the mounting port (28); and the end cap (24) is provided with a closure plate (241), a first clamping plate (242) connected to the closure plate (241) and clamped between the first clamping strip (211) and the second clamping strip (212), and a second clamping plate (243) connected to the closure plate (241) and clamped between the third clamping strip (221) and the fourth clamping strip (222).

10. The window shade according to any one of claims 1 to 9, wherein the honeycomb fabric (3) is provided therein with a cord hole (31) running through the honeycomb fabric (3) from top to bottom; and the cord (6) comprises the one end wound on the spool (52) and the other end connected to the first base (1) through the cord hole (31).
